# EUROPEAN PATENT SPECIFICATION

(11) **EP 2 504 823 B1**
(45) Date of publication and mention of the grant of the patent: **01.10.2014**
(21) Application number: 10832593.7
(22) Date of filing: 14.10.2010
(51) Int. Cl.: G08B 13/14, G06K 7/00, G08B 21/02, G08B 13/24, G06Q 10/00

(54) **ANTI-THEFT RFID SYSTEM AND METHOD THEREOF**
DIEBSTAHLSICHERES RFID-SYSTEM UND VERFAHREN DAFÜR
SYSTÈME ET PROCÉDÉ ANTIVOL À IDENTIFICATION PAR RADIOFRÉQUENCE

(30) Priority: 26.11.2009 US 264672 P
(43) Date of publication of application: 03.10.2012
(73) Proprietor: Man, Chun Sing Matthew, N.T., Hong Kong (CN)
(72) Inventor: Man, Chun Sing Matthew, N.T., Hong Kong (CN)
(74) Representative: Hocking, Adrian Niall
(86) International application number: PCT/CN2010/077728
(87) International publication number: WO 2011/063686

(56) References cited:
- CN-A- 101 046 851
- JP-A- 2001 243 564
- JP-A- 2007 079 615
- JP-A- 2007 079 615
- US-A1- 2003 052 788
- US-A1- 2004 111 335
- US-A1- 2007 241 865

## Description

### Field of the Patent Application

The present patent application generally relates to anti-theft technologies and more particularly to an anti-theft RFID system and a method thereof.

### Background

Merchandise theft has reached a total of billions of US dollars every year. The amount of merchandise stolen by shoplifters and employees represents the majority of the total shrinkage. Therefore loss prevention can have its greatest impact by deterring would-be shoplifters and enabling merchandise recovery. Thieves tend to focus on small and easily-concealed, expensive, branded items that have considerable popular appeal and are easily re-sellable. Amongst the most vulnerable merchandise, small items such as branded watches and fine jewelry are always classified on the top few of the most attractive stolen products. There is no doubt that even a small single item being shoplifted in a luxury watch/jewelry shop will cost a big loss to the shop. It is absolutely intolerable of one case from happening. Unfortunately, even though significant innovations are taking place in the industry, there are not many new and effective solutions available today, spreading from comprehensive product protection strategies to state-of-the-art shrink management systems. In particular, holistic system approach in integrating shoplifting prevention into the branded item retailer work mode is rarely found in the market.

JP2007079615 discloses a merchandise management system. The system comprises an antenna and a RFID tag reader for detecting a RFID tag attached to an individual item of merchandise displayed on a merchandise display rack in a contactless manner. There is also provided a controller for controlling the operation of the system. The system is capable of carrying out RFID tag detection on a repeat basis, and each time a tag detection process is carried out, the number of detected RFID tags is counted. Each time the RFID tags are counted, the counted number of tags is compared to the counted number of tags detected during the previous tag detection process and if the counted number of tags is smaller than the previous count, an alarm is operated.

US2007/0241865 discloses an information management system comprising a wireless IC tag and a wireless IC tag reader/writer. The wireless IC tag is provided with a counter. The information management system includes both the wireless IC tag and a wireless IC tag reader/writer. The system can be used to determine the integrity of the wireless IC tag and to identify the cause of a failure when the reader/writer fails to obtain information to/from the wireless IC tag.

US2004/0111335 discloses a RFID space monitoring and asset inventory system. The system comprises radio frequency tags having RFID elements which are located in or on items situated in a given area of interest. The system further comprises an antenna which is automatically and virtually continuously moved around the proximity of the items to interrogate the presence of the items. When the RFID tags are interrogated by a RFID interrogation source, the source is quickly able to gain information as to the presence or absence of the item, and the identity of the item, for comparison to a database. Thus, inventory can be conducted continuously, which is particularly useful in the sale of high priced items. Thus, an operator can determine in real time what items are stored, sold, moved or displayed, etc., which greatly simplifies inventory assessments and aids in reducing theft. JP2001243564 discloses a jewelry robbery monitoring device. The device comprises a tag capable of being attached to an item of jewelry contained within a display stand. The device also has a detection mechanism for detecting the presence of transmission/reception signals which are transmitted and received from the tag, when the item of jewelry is present. In the event that the signals are detected at a distance which exceeds a predetermined distance from the display stand, a robbery state is detected, and an alarm is generated by the detection mechanism. A counter is also provided near the display stand for indicating the number of stored pieces of jewelry.

US2003/0052788 discloses a medical assistance and tracking system and method employing smart tags. The system comprises a medication tracking and/or medical assistance device comprising a RFID tag coder for reading from and/or writing to a RFID tag. A processor and a memory process are also provided and information is read from the RFID tag to provide a reminder message based thereon by a visual and/or an audible reminder message.

The above documents disclose various systems and apparatus for monitoring the presence of items, in particular merchandise items, within a predefined area. However, these systems all relate to fixed displays or the specific tracking of the individual items themselves, thereby still making it difficult to track and/or cumbersome when being presented to and tried on by a customer.

### Summary

The present patent application is directed to a mobile tray for displaying a plurality of merchant items comprising an anti-theft RFID system for monitoring the presence of the items, each of the items being attached to an RFID tag. In one aspect, the anti-theft RFID system includes an RFID reader, the RFID reader including an antenna and being configured to transmit an interrogating signal to the RFID tags and retrieve data from the RFID tags through the antenna; a processor connected to the RFID reader and configured to process the data that the RFID reader retrieves from the RFID tags; and a display connected to the processor and configured to display a result processed by the processor. The processor is configured to update a first counter value indicating the number of tagged items located within a predefined area and to update a second counter value indicating the number of tagged items being taken away from the predefined area. The display is configured to display the values of the first and the second counters and thereby to assist an operator to determine the occurrence of a security event by analyzing the values of the first and the second counters; the RFID reader, the processor, the display and the antenna are embedded within the tray; the RFID reader and the antenna being arranged so as not to be visible from the exterior of the tray, and arranged so as to detect and monitor the presence of the items being displayed on the mobile tray.

The processor and the display may be integrated into a mobile computer. The display may be a touch screen display. The anti-theft RFID system may further include a battery pack connected to the processor. The RFID reader, the processor and the display are powered by the battery pack. The anti-theft RFID system may further include a wireless battery charger connected to the battery pack. The wireless battery charger is configured to charge the battery pack wirelessly.

The anti-theft RFID system may further include a panic button connected to the processor. The panic button is configured to be pushed by the operator when the operator determines a security event has occurred and thereby to trigger a predefined alert and a predetermined authentication procedure.

The processor may be connected to a remote computer and monitored thereby. The processor may be configured to reset the first counter and the second counter after the operator determines no security event has occurred during a predefined session.

In another aspect, the present patent application provides a method for detecting a security event for a plurality of merchant items using the above mobile tray, each of the items being attached to an RFID tag. The method includes transmitting an interrogating signal to the RFID tags and retrieving data from the RFID tags; processing the data retrieved from the RFID tags; and displaying a result of the processing. The step of processing the data retrieved from the RFID tags includes updating a first counter value indicating the number of tagged items located within a predefined area, updating a second counter value indicating the number of tagged items being taken away from the predefined area, and determining the occurrence of a security event by comparing the value of the first counter with an expected value and comparing the value of the second counter with zero.

The method may further include generating a predefined alert and initiating a predetermined authentication procedure after determining a security event has occurred during a predefined session. The method may further include remotely and concurrently monitoring and processing the data retrieved from the RFID tags at multiple locations. The method may further include after determining no security event has occurred during a predefined session, resetting the first counter and the second counter.

In yet another aspect, the present patent application provides an anti-theft RFID system for monitoring the presence of a plurality of tagged items, each of the tagged items being attached to an RFID tag. The anti-theft RFID system includes an RFID reader, the RFID reader including an antenna and being configured to transmit an interrogating signal to the RFID tags and retrieve data from the RFID tags through the antenna; a processor connected to the RFID reader and configured to process the data that the RFID reader retrieves from the RFID tags; and a display connected to the processor and configured to display a result processed by the processor. The processor is configured to update a first counter value indicating the number of tagged items located within a predefined area, to update a second counter value indicating the number of tagged items being taken away from the predefined area, to compare the value of the first counter with an expected value, and to compare the value of the second counter with zero so as to assist an operator to determine the occurrence of a security event. The display is configured to display the values of the first counter and the second counter.

### Brief Descriptions of the Drawings

FIG. 1 is a block diagram of an anti-theft RFID system in accordance with an embodiment of the present patent application.
FIG. 2 is a block diagram of an anti-theft RFID system used in a mobile environment in accordance with another embodiment of the present patent application.
FIG. 3 is a block diagram of an anti-theft RFID system with a panic button for security purpose in accordance with yet another embodiment of the present patent application.
FIG. 4 is a flow chart illustrating the operation of the anti-theft RFID systems as depicted in FIG. 1 and FIG. 2.
FIG. 5 is a top view of an anti-theft RFID system in accordance with still another embodiment of the present patent application.
FIG. 6 is a perspective view of the anti-theft RFID system depicted in FIG. 5.
FIG. 7 is a top view of an anti-theft RFID system in accordance with still another embodiment of the present patent application.
FIG. 8 is a perspective view of the anti-theft RFID system depicted in FIG. 7.
FIG. 9 is a block diagram of an anti-theft RFID system including a wireless charger adaptor for battery charging in accordance with still another embodiment of the present patent application.

### Detailed Description

Reference will now be made in detail to a preferred embodiment of the anti-theft RFID system and the method thereof disclosed in the present patent application, examples of which are also provided in the following description. Exemplary embodiments of the anti-theft RFID system and the method thereof disclosed in the present patent application are described in detail, although it will be apparent to those skilled in the relevant art that some features that are not particularly important to an understanding of the anti-theft RFID system and the method thereof may not be shown for the sake of clarity.

Furthermore, it should be understood that the anti-theft RFID system and the method thereof disclosed in the present patent application is not limited to the precise embodiments described below and that various changes and modifications thereof may be effected by one skilled in the art without departing from the spirit or scope of the protection. For example, elements and/or features of different illustrative embodiments may be combined with each other and/or substituted for each other within the scope of this disclosure.

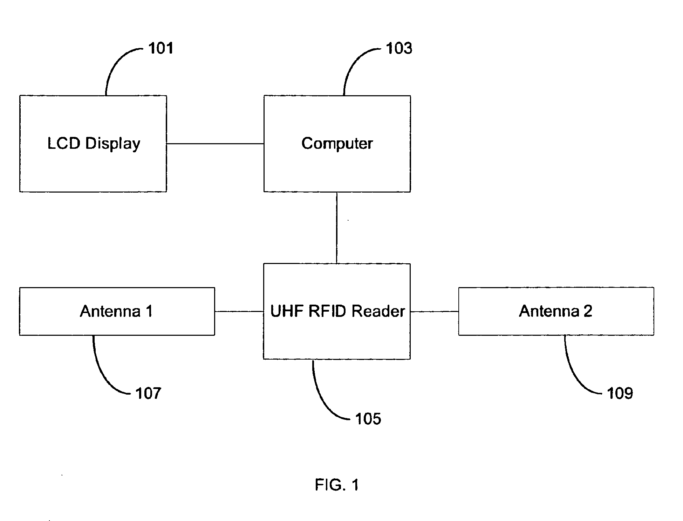

FIG. 1 is a block diagram of an anti-theft RFID system in accordance with an embodiment of the present patent application. The system includes a display (a LCD display 101 in the illustrated embodiment), a processor (a computer 103 in the illustrated embodiment) connected to the LCD display 101, an RFID reader 105 connected to the computer 103, at least one antenna connected to the RFID reader 105, so that RFID tags proximate to the system can be detected. In this embodiment, there are two antennas 107 and 109, respectively connected to the RFID reader 105 to ensure the read area coverage. The RFID reader 105 is an ultra-high frequency (UHF) RFID Reader. The LCD display 101 may be a touch screen LCD display.

In operation, the RFID reader 105, controlled by the computer 103, is configured to detect any RFID tags proximate thereto and interrogate the tags for retrieving data from the RFID tags. The RFID reader 105 is configured to send the data it retrieves from the RFID tags to the computer 103. The computer is configured to continuously monitor any change in the data.

In general, the anti-theft RFID system in this embodiment may be used in luxury shops. These shops typically do not prefer installing huge equipments and systems that are unmatched with the shop interior design. Therefore the anti-theft RFID system is designed in a way so that the whole setup is very small in size, which is feasible to lodge in the store in a hidden manner. The embodiment as illustrated in FIG. 1 can be seamlessly installed under the display shelves and fixed containers.

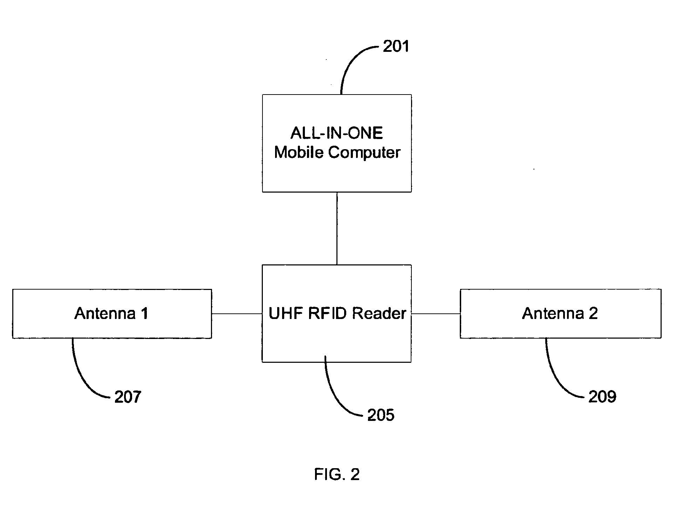

FIG. 2 is a block diagram of an anti-theft RFID system used in a mobile environment in accordance with another embodiment of the present patent application. In this embodiment, the display 101 and the processor 103 are embedded in an all-in-one mobile computer 201. In particular, the all-in-one mobile computer 201 includes a touch screen monitor. The whole setup should be able to operate with battery power supply or direct current (DC) power supply. This system can be lodged and embedded inside movable containers such as display trays, bins, boxes, etc.

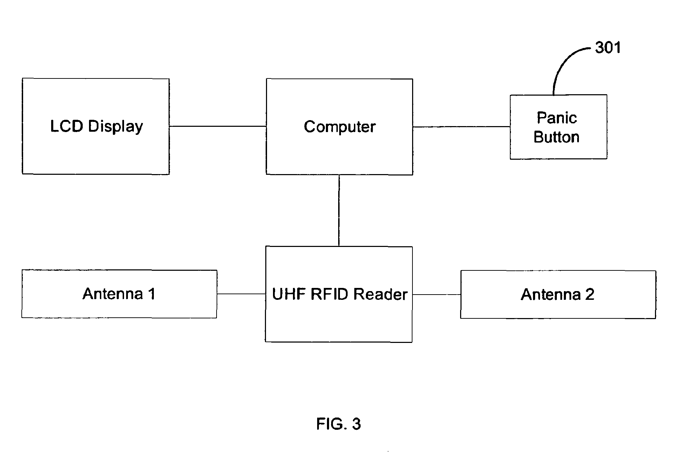

FIG. 3 is a block diagram of an anti-theft RFID system with a panic button for security purpose in accordance with yet another embodiment of the present patent application. In this embodiment, a predefined notification alert will be generated at the backend system when an operator determines a security event may have happened and presses the panic button 301.

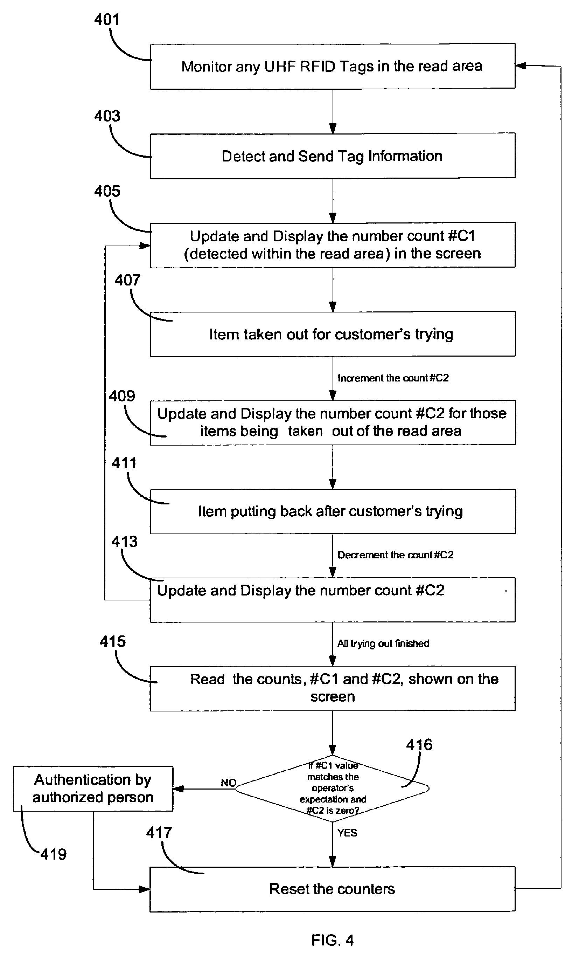

FIG. 4 is a flow chart illustrating the operation of the anti-theft RFID systems as depicted in FIG. 1 and FIG. 2. An RFID tag is used to store a unique product identifier for a merchandize item in a luxury store environment. The RFID reader (105 or 205) is used to detect and read the tag information so that the detected luxury item is recognized. Each item is associated with an RFID tag.

Usually the luxury items are put inside the display shelves. They are taken out for customer try-out upon request. Initially, when a customer wants to try out some items such as fine jewelry or watches at a luxury store, the store staff will put these items onto a tray or a fixed area. For simplicity, the system in the embodiment for a mobile environment as depicted in FIG. 2 is used in this illustration. The antennas (207 and 209) and the whole setup are embedded within a movable tray. The same system flow applies when the setup is installed in fixed display shelves.

The antennas 207 and 209 installed in the tray are configured to monitor and detect the presence of the tagged items (Step 401). If the tag information is recognized, the RFID reader 205 will send the tag information to the computer 201 (Step 403). The computer 201 will update a counter (#C1) that is used to count the number of tagged merchandized items being detected over the tray, e.g. the total number of items on the tray in the beginning before any try-out (Step 405). This counter starts from zero and increases with the number of tagged merchandized items detected on the tray. The count is displayed on a touch-screen monitor included in the computer 201. During the trying out process, the item being tried out is taken out from the tray (Step 407). Then the system will detect that some RFID tagged items are out of the read area, i.e. the tray. The system will then update another counter (#C2) that is used to count the number of tagged merchandized items being taken out of the read area (Step 409). This count is also displayed in the small touch-screen monitor so as to give a clear comparison to the luxury store staff. This process continues while the customer tries out the items he/she likes. When the customer finishes trying out an item, the staff should put the item back onto the tray (Step 411). The counter (#C2) shall remove the details (RFID tag information) of the returned item or items from its counter value and display the updated counter value on the touch screen of the computer 201 (Step 413). The process continues until the customer finishes trying out all preferred items. In the end, the store staff should read the counter values of both counters #C1 and #C2 (Step 415). If the counter #C2 reads zero (0), then it means that all items being try-out are safely and properly collected back onto the tray. The counters will then be reset by the store staff (Step 417). Otherwise if counter #C2 is not zero, there may be some items not yet collected by the store staff or a shoplifting may have already occurred. In the case of a non-zero counter #C2 value, an internal store authentication procedure will be carried out (Step 419). An authorized person is required to present his/her card, which is also RFID enabled, over the tray and let the system counters reset. Other approach in authentication procedure can be defined according to the store policy.

In the middle of the customer's trying out process, new items, which are not put onto and hence detected by the tray in the beginning, are allowed to put onto the tray anytime. The aforementioned Step 401, 403 and 405 will follow so that the counter #C1 will increase to reflect the new items being detected on the tray.

In the above embodiment, if the value of the counter #C1 does not match the store staff's expectation or #C2 is not zero (Step 416), then a security event may have occurred and an internal store authentication procedure will be carried out (Step 419). It is understood that such analysis on the counter values of #C1 and #C2 may be conducted by the store staff or automatically by the computer 201.

In addition, the system may be configured to provide a monitoring feature so that the counter numbers displayed on the screen can be remotely monitored by a remote computer. In other words, a centralized computer can be used to monitor the actual happening in real time on every movable tray in the shop. The same monitoring feature applies when the setup is installed in fixed display shelves.

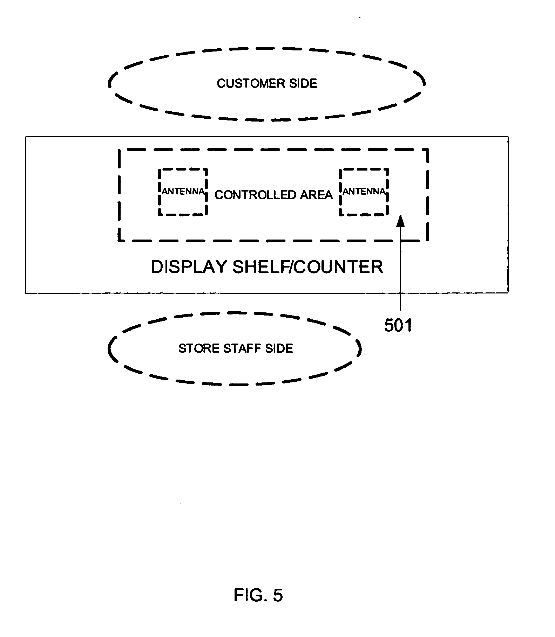

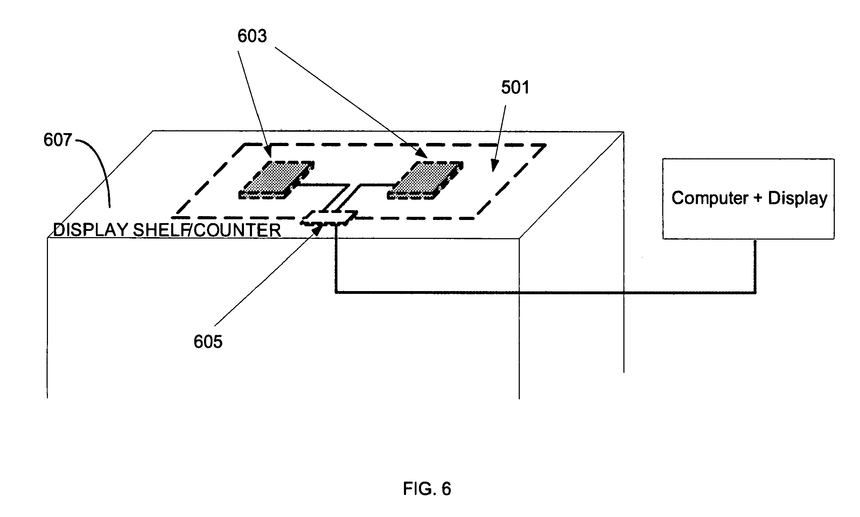

FIG. 5 is a top view of an anti-theft RFID system in accordance with still another embodiment of the present patent application. FIG. 6 is a perspective view of the anti-theft RFID system depicted in FIG. 5. FIG. 5 and FIG. 6 illustrate the physical installation of the system setup when they are applied in the fixed container or display shelf. Referring to FIG. 5, the luxury items are put on the display shelf or display counter before customer's trying out so that a defined area 501 on top of the display shelf can be assigned. This area 501 is a controlled area where the antennas and RFID reader are installed for detection of any tagged item being placed over there. The antennas and RFID reader are indeed embedded under the display shelf so that it is invisible to the customer. Any tagged item put in the controlled area 501 shall be detected by system. The computer and the display can be running in the same shelf counter area 501 or anywhere away from it. FIG. 6 illustrates the hiding of these setups and systems. The antennas 603 and the RFID reader 605 are hidden under the surface of display shelf or the display counter 607.

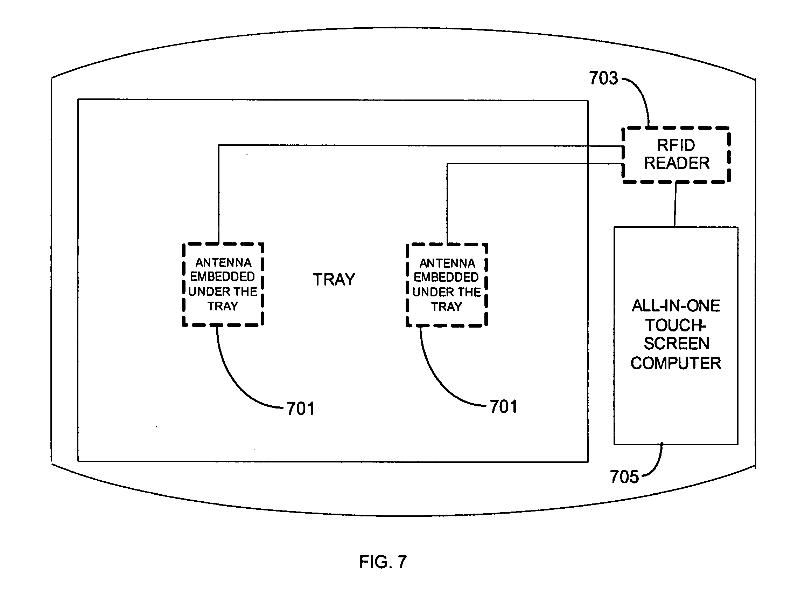

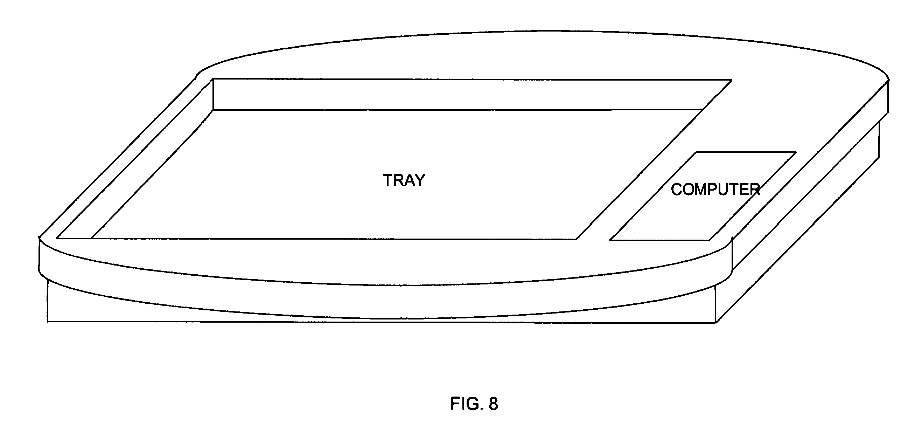

FIG. 7 is a top view of an anti-theft RFID system in accordance with still another embodiment of the present patent application. FIG. 8 is a perspective view of the anti-theft RFID system depicted in FIG. 7. FIG. 7 and FIG. 8 illustrate the physical installation of the system setup when they are applied in any movable containers, such as a tray in this embodiment. Referring to FIG. 7, the antennas 701 are installed under the tray surface so that when the tagged items are put inside the tray, they are detected by the antennas connected to the RFID reader 703. An all-in-one touch screen computer 705 is lodged to operate the system and display the results to the store staff. FIG. 8 illustrates the perspective view of the tray with RFID devices installed. The antennas and the RFID reader are invisible from the outer appearance of the tray. The same design applies to all other movable containers.

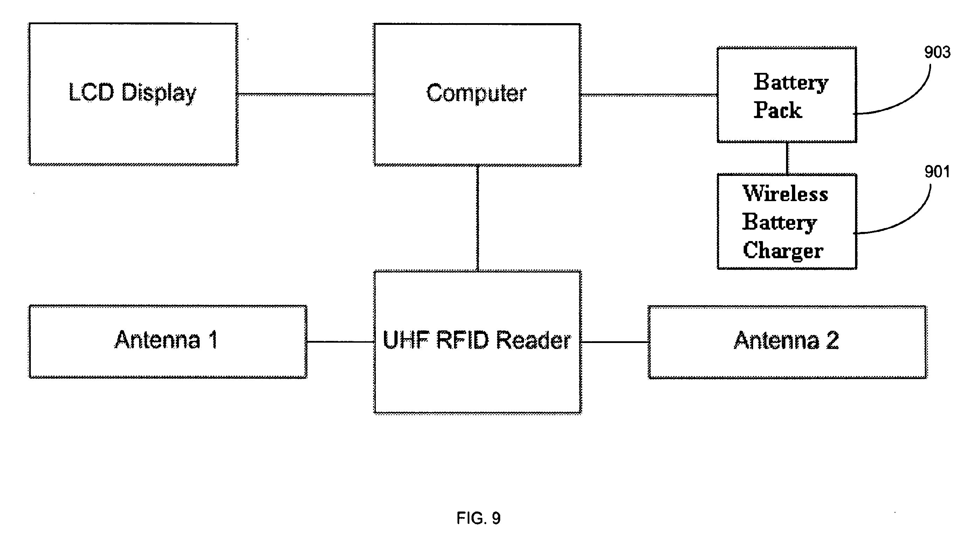

FIG. 9 is a block diagram of an anti-theft RFID system including a wireless charger adaptor for battery charging in accordance with still another embodiment of the present patent application. In this embodiment, the system battery pack 903 can be recharged wirelessly by the wireless battery charger 901. The system should be able to operate under this battery power supply configuration with the battery power supply in the same way as in the aforementioned embodiments.

While the present patent application has been shown and described with particular references to a number of embodiments thereof, it should be noted that various other changes or modifications may be made without departing from the scope of the present invention as defined by the following claims.

## Claims

1. A mobile tray for displaying a plurality of merchant items comprising an anti-theft RFID system for monitoring the presence of the items, each of the items being attached to an RFID tag, the anti-theft RFID system comprising:
an RFID reader (105, 205, 703), the RFID reader (105, 205, 703) comprising an antenna (107, 109, 207, 209, 701) and being configured to transmit an interrogating signal to the RFID tags and retrieve data from the RFID tags through the antenna (107, 109, 207, 209, 701);
a processor (103) connected to the RFID reader (105, 205, 703) and configured to process the data that the RFID reader (105, 205, 703) retrieves from the RFID tags; and
a display (101) connected to the processor (103) and configured to display a result processed by the processor (103); wherein:
the processor (103) is configured to update a first counter value indicating the number of tagged items located within a predefined area and to update a second counter value indicating the number of tagged items being taken away from the predefined area; and
the display (101) is configured to display the values of the first and the second counters;
**characterised in that** the RFID reader (105, 205, 703), the processor (103), the display (101) and the antenna (107, 109, 207, 209, 701) are embedded within the tray; the RFID reader (105, 205, 703) and the antenna (107, 109, 207, 209, 701) being arranged so as not to be visible from the exterior of the tray, and arranged so as to detect and monitor the presence of the items being displayed on the mobile tray.

2. A mobile tray as claimed in claim 1, wherein the processor (103) and the display (101) are integrated into a mobile computer (201, 705).

3. A mobile tray as claimed in claim 1, wherein the display (101) is a touch screen display.

4. A mobile tray as claimed in claim 1, further comprising a battery pack (903) connected to the processor (103), wherein the RFID reader (105, 205, 703), the processor (103) and the display (101) are powered by the battery pack (903).

5. A mobile tray as claimed in claim 4, further comprising a wireless battery charger (901) connected to the battery pack (903), wherein the wireless battery charger (901) is configured to charge the battery pack (903) wirelessly.

6. A mobile tray as claimed in claim 1, further comprising a panic button (301) connected to the processor (103), wherein the panic button (301) is configured to be pushed by the operator when the operator determines a security event has occurred and thereby to trigger a predefined alert and a predetermined authentication procedure.

7. A mobile tray as claimed in claim 1, wherein the processor (103) is connected to a remote computer and monitored thereby.

8. A mobile tray as claimed in claim 1, wherein the processor (103) is configured to reset the first counter and the second counter after the operator determines no security event has occurred during a predefined session.

9. A mobile tray as claimed in claim 1, wherein the processor (103) is further configured to compare the value of the first counter with an expected value, and to compare the value of the second counter with zero so as to assist an operator to determine the occurrence of a security event.

10. A mobile tray as claimed in claim 1, wherein the display (101) assist an operator to determine the occurrence of a security event by analyzing the values of the first and the second counters.

11. A method for detecting a security event for a plurality of merchant items using the mobile tray as claimed in any one of claims 1 to 10, each of the items being attached to an RFID tag, the method comprising:
transmitting an interrogating signal to the RFID tags and retrieving data from the RFID tags;
processing the data retrieved from the RFID tags; and
displaying a result of the processing; wherein:
the step of processing the data retrieved from the RFID tags comprises updating a first counter value indicating the number of tagged items located within a predefined area, updating a second counter value indicating the number of tagged items being taken away from the predefined area, and determining the occurrence of a security event by comparing the value of the first counter with an expected value and comparing the value of the second counter with zero.

12. A method as claimed in claim 11, further comprising generating a predefined alert and initiating a predetermined authentication procedure after determining a security event has occurred during a predefined session.

13. A method as claimed in claim 11, further comprising remotely and concurrently monitoring and processing the data retrieved from the RFID tags at multiple locations.

14. A method as claimed in claim 11, further comprising after determining no security event has occurred during a predefined session, resetting the first counter and the second counter.

## Patentansprüche

1. Mobile Ablage zum Anzeigen mehrerer Händlerelemente, umfassend ein RFID-Diebstahlsicherungssystem zum Überwachen des Vorhandenseins der Elemente, wobei jedes der Elemente an einem RFID-Tag befestigt ist, wobei das RFID-Diebstahlsicherungssystem Folgendes umfasst:
ein RFID-Lesegerät (105, 205, 703), wobei das RFID-Lesegerät (105, 205, 703) eine Antenne (107, 109, 207, 209, 701) umfasst und konfiguriert ist, um ein Abfragesignal an die RFID-Tags zu übertragen und Daten von den RFID-Tags über die Antenne (107, 109, 207, 209, 701) zu erhalten;
einen Prozessor (103), der mit dem RFID-Lesegerät (105, 205, 703) verbunden ist und zum Verarbeiten der Daten, die das RFID-Lesegerät (105, 205, 703) von den RFID-Tags erhält, konfiguriert ist; und
eine Anzeige (101), die mit dem Prozessor (103) verbunden ist und zum Anzeigen eines von dem Prozessor (103) verarbeiteten Ergebnisses konfiguriert ist; wobei:
der Prozessor (103) zum Aktualisieren eines ersten Zählerwertes, der die Anzahl der mit Tag versehenen Elemente, die in dem zuvor definierten Bereich angeordnet sind, und zum Aktualisieren eines zweiten Zählerwertes, der die Anzahl der mit Tag versehenen Elemente, die aus dem zuvor definierten Bereich entfernt werden, konfiguriert ist; und
wobei die Anzeige (101) zum Anzeigen der Werte des ersten und des zweiten Zählers konfiguriert ist;
**dadurch gekennzeichnet, dass** das RFID-Lesegerät (105, 205, 703), der Prozessor (103), die Anzeige (101) und die Antenne (107, 109, 207, 209, 701) in der Ablage eingebettet sind;
wobei das RFID-Lesegerät (105, 205, 703) und die Antenne (107, 109, 207, 209, 701) derart angeordnet sind, um von außerhalb der Ablage nicht sichtbar zu sein und derart angeordnet sind, um das Vorhandensein der auf der mobilen Ablage angezeigten Elemente zu erkennen und zu überwachen.

2. Mobile Ablage nach Anspruch 1, wobei der Prozessor (103) und die Anzeige (101) in einem mobilen Computer (201, 705) integriert sind.

3. Mobile Ablage nach Anspruch 1, wobei die Anzeige (101) eine Berührungsbildschirmanzeige ist.

4. Mobile Ablage nach Anspruch 1, ferner umfassend ein Batteriepack (903), das mit dem Prozessor (103) verbunden ist, wobei das RFID-Lesegerät (105, 205, 703), der Prozessor (103) und die Anzeige (101) von dem Batteriepack (903) betrieben werden.

5. Mobile Ablage nach Anspruch 4, ferner umfassend ein drahtloses Batterie-Ladegerät (901), das mit dem Batteriepack (903) verbunden ist, wobei das drahtlose Batterie-Ladegerät (901) zum drahtlosen Aufladen des Batteriepacks (903) konfiguriert ist.

6. Mobile Ablage nach Anspruch 1, ferner umfassend einen Alarmknopf (301), der mit dem Prozessor (103) verbunden ist, wobei der Alarmknopf (301) zum Drücken von dem Bediener konfiguriert ist, wenn der Bediener bestimmt, dass ein Sicherheitsereignis stattgefunden hat und dadurch einen zuvor definierten Warnhinweis und einen vorbestimmten Authentifizierungsablauf auslöst.

7. Mobile Ablage nach Anspruch 1, wobei der Prozessor (103) mit einem entfernten Computer verbunden ist und von diesem überwacht wird.

8. Mobile Ablage nach Anspruch 1, wobei der Prozessor (103) zum Zurücksetzen des ersten Zählers und des zweiten Zählers konfiguriert ist, nachdem der Bediener bestimmt hat, dass kein Sicherheitsereignis während der zuvor definierten Sitzung stattgefunden hat.

9. Mobile Ablage nach Anspruch 1, wobei der Prozessor (103) ferner konfiguriert ist, um den Wert des ersten Zählers mit einem erwarteten Wert zu vergleichen, und um den Wert des zweiten Zählers mit null zu vergleichen, um einen Bediener bei der Bestimmung des Vorkommens eines Sicherheitsereignisses zu unterstützen.

10. Mobile Ablage nach Anspruch 1, wobei die Anzeige (101) einen Bediener bei der Bestimmung des Vorkommens eines Sicherheitsereignisses durch Analysieren der Werte des ersten und des zweiten Zählers unterstützt.

11. Verfahren zum Erkennen eines Sicherheitsereignisses für mehrere Händlerelemente unter Verwendung der mobilen Ablage nach einem der Ansprüche 1 bis 10, wobei jedes der Elemente an einem RFID-Tag befestigt ist, wobei das Verfahren Folgendes umfasst:
Übertragen eines Abfragesignals an die RFID-Tags und Erhalten der Daten von den RFID-Tags;
Verarbeiten der Daten, die von den RFID-Tags erhalten wurden; und
Anzeigen eines Ergebnisses der Verarbeitung; wobei:
der Schritt des Verarbeitens der von den RFID-Tags erhaltenen Daten das Aktualisieren eines ersten Zählerwertes umfasst, der die Anzahl von mit Tag versehenen Elementen anzeigt, die in einem zuvor definierten Bereich angeordnet sind, das Aktualisieren eines zweiten Zählerwertes, der die Anzahl von mit Tag versehenen Elementen anzeigt, die aus dem zuvor definierten Bereich entfernt werden, und das Bestimmen des Vorkommens eines Sicherheitsereignisses durch Vergleichen des Werts des ersten Zählers mit einem erwarteten Wert und Vergleichen des Werts des zweiten Zählers mit null umfasst.

12. Verfahren nach Anspruch 11, ferner umfassend das Erzeugen eines zuvor definierten Warnhinweises und Einleiten eines vorbestimmten Authentifizierungsablaufs nach Bestimmen, dass ein Sicherheitsereignis während einer zuvor definierten Sitzung stattgefunden hat.

13. Verfahren nach Anspruch 11, ferner umfassend das entfernte und gleichzeitige Überwachen und Verarbeiten der von den RFID-Tags erhaltenen Daten an mehreren Standorten.

14. Verfahren nach Anspruch 11, ferner umfassend, nach Bestimmen, dass kein Sicherheitsereignis während einer zuvor definierten Sitzung stattgefunden hat, das Zurücksetzen des ersten Zählers und des zweiten Zählers.

## Revendications

1. Plateau mobile pour afficher une pluralité d'articles de marchand comprenant un système RFID antivol pour surveiller la présence des articles, chacun des articles étant fixé à une étiquette RFID, le système RFID antivol comprenant :
un lecteur RFID (105, 205, 703), le lecteur RFID (105, 205, 703) comprenant une antenne (107, 109, 207, 209, 701) et étant configuré pour émettre un signal d'interrogation aux étiquettes RFID et extraire des données des étiquettes RFID à travers l'antenne (107, 109, 207, 209, 701) ;
un processeur (103) connecté au lecteur RFID (105, 205, 703) et configuré pour traiter les données que le lecteur RFID (105, 205, 703) extrait des étiquettes RFID ; et
un dispositif d'affichage (101) connecté au processeur (103) et configuré pour afficher un résultat traité par le processeur (103) ; dans lequel :
le processeur (103) est configuré pour mettre à jour une première valeur de compteur indiquant le nombre d'articles étiquetés localisés à l'intérieur d'une zone prédéfinie et pour mettre à jour une seconde valeur de compteur indiquant le nombre d'articles étiquetés qui sont retirés de la zone prédéfinie ; et
le dispositif d'affichage (101) est configuré pour afficher les valeurs des premier et second compteurs ;
**caractérisé par le fait que** le lecteur RFID (105, 205, 703), le processeur (103), le dispositif d'affichage (101) et l'antenne (107, 109, 207, 209, 701) sont intégrés à l'intérieur du plateau ; le lecteur RFID (105, 205, 703) et l'antenne (107, 109, 207, 209, 701) étant agencés afin de ne pas être visibles depuis l'extérieur du plateau, et agencés afin de détecter et surveiller la présence des articles qui sont affichés sur le plateau mobile.

2. Plateau mobile tel que revendiqué à la revendication 1, dans lequel le processeur (103) et le dispositif d'affichage (101) sont intégrés dans un ordinateur mobile (201, 705).

3. Plateau mobile tel que revendiqué à la revendication 1, dans lequel le dispositif d'affichage (101) est un dispositif d'affichage à écran tactile.

4. Plateau mobile tel que revendiqué à la revendication 1, comprenant en outre un bloc-batterie (903) connecté au processeur (103), le lecteur RFID (105, 205, 703), le processeur (103) et le dispositif d'affichage (101) étant alimentés en puissance par le bloc-batterie (903).

5. Plateau mobile tel que revendiqué à la revendication 4, comprenant en outre un chargeur de batterie sans fil (901) connecté au bloc-batterie (903), le chargeur de batterie sans fil (901) étant configuré pour charger le bloc-batterie (903) de manière sans fil.

6. Plateau mobile tel que revendiqué à la revendication 1, comprenant en outre un bouton d'urgence (301) connecté au processeur (103), le bouton d'urgence (301) étant configuré pour être poussé par l'opérateur lorsque l'opérateur détermine qu'un événement de sécurité s'est produit et ainsi pour déclencher une alerte prédéfinie et une procédure d'authentification prédéterminée.

7. Plateau mobile tel que revendiqué à la revendication 1, dans lequel le processeur (103) est connecté à un ordinateur à distance et surveillé par celui-ci.

8. Plateau mobile tel que revendiqué à la revendication 1, dans lequel le processeur (103) est configuré pour réinitialiser le premier compteur et le second compteur après que l'opérateur détermine qu'aucun événement de sécurité ne s'est produit durant une session prédéfinie.

9. Plateau mobile tel que revendiqué à la revendication 1, dans lequel le processeur (103) est en outre configuré pour comparer la valeur du premier compteur à une valeur attendue, et pour comparer la valeur du second compteur à zéro afin d'assister un opérateur pour déterminer la survenue d'un événement de sécurité.

10. Plateau mobile tel que revendiqué à la revendication 1, dans lequel le dispositif d'affichage (101) assiste un opérateur pour déterminer la survenue d'un événement de sécurité par analyse des valeurs des premier et second compteurs.

11. Procédé pour détecter un événement de sécurité pour une pluralité d'articles de marchand en utilisant le plateau mobile tel que revendiqué à l'une quelconque des revendications 1 à 10, chacun des articles étant fixé à une étiquette RFID, le procédé comprenant :
l'émission d'un signal d'interrogation aux étiquettes RFID et l'extraction de données des étiquettes RFID ;
le traitement des données extraites des étiquettes RFID ; et
l'affichage d'un résultat du traitement ; dans lequel :
l'étape de traitement des données extraites des étiquettes RFID comprend la mise à jour d'une première valeur de compteur indiquant le nombre d'articles étiquetés localisés à l'intérieur d'une zone prédéfinie, la mise à jour d'une seconde valeur de compteur indiquant le nombre d'articles étiquetés qui sont retirés de la zone prédéfinie, et la détermination de la survenue d'un événement de sécurité par comparaison de la valeur du premier compteur à une valeur attendue et comparaison de la valeur du second compteur à zéro.

12. Procédé tel que revendiqué à la revendication 11, comprenant en outre la génération d'une alerte prédéfinie et le déclenchement d'une procédure d'authentification prédéterminée après détermination qu'un événement de sécurité s'est produit durant une session prédéfinie.

13. Procédé tel que revendiqué à la revendication 11, comprenant en outre la surveillance et le traitement à distance et simultanément des données extraites des étiquettes RFID à de multiples emplacements.

14. Procédé tel que revendiqué à la revendication 11, comprenant en outre, après détermination qu'aucun événement de sécurité ne s'est produit durant une session prédéfinie, la réinitialisation du premier compteur et du second compteur.
